# FASCICULE DE BREVET EUROPEEN

(11) **EP 3 101 269 B1**
(45) Date de publication et mention de la délivrance du brevet: **19.09.2018**
(21) Numéro de dépôt: 15743331.9
(22) Date de dépôt: 20.01.2015
(51) Int. Cl.: F03B 13/20

(54) **SYSTÈME DE GÉNÉRATION D'ÉNERGIE À PARTIR DU MOUVEMENT DES VAGUES MARINES**
SYSTEM ZUR ERZEUGUNG VON ENERGIE AUS MEERESWELLENBEWEGUNG
SYSTEM FOR GENERATING ENERGY FROM OCEAN WAVE MOTION

(30) Priorité: 30.01.2014 ES 201430111
(43) Date de publication de la demande: 07.12.2016
(73) Titulaire: Azpiroz Villar, Francisco, 20008 San Sebastian (ES)
(72) Inventeur: Azpiroz Villar, Francisco, 20008 San Sebastian (ES)
(74) Mandataire: Urizar Barandiaran, Miguel Angel
(86) Numéro de dépôt international: PCT/ES2015/070029
(87) Numéro de publication internationale: WO 2015/114187

(56) Documents cités:
- WO-A1-2011/162817
- GB-A- 2 491 802
- JP-A- H05 164 036
- US-A- 1 018 678
- US-A- 3 002 484
- US-A- 4 319 454
- US-A1- 2011 304 144
- US-A1- 2013 038 064

## Description

### Objet de l'invention

L'objet de l'invention concerne un système de génération d'énergie à partir du mouvement des vagues marines.

### Antécédents de l'invention

Dans l'état actuel de la technique des systèmes de génération d'énergie à partir du mouvement des vagues marines sont déjà connus et comprennent :
- une plateforme flottante (généralement une embarcation) porteuse d'au moins un axe-rotor qui agit sur un générateur d'électricité ;
- au moins une bouée fixée à la plateforme au moyen d'un bras ; et
- des moyens mécaniques pour transmettre le mouvement de chaque bouée à l'axe-rotor correspondant.

Le propre solliciteur est titulaire, entre autres, des documents de brevet WO2011131811 et WO2012172131. Dans le document du brevet WO2011131811, un système comportant les éléments décrits ci-dessus est connu. Il utilise un ou plusieurs dépôts lestés avec de l'eau de mer de façon que, lorsqu'il n'y a pas de vagues, ces dépôts restent juste à la hauteur de la ligne de flottaison et lorsqu'il y en a, les dépôts génèrent des forces descendantes qui s'additionnent à la force descendante généré par la propre embarcation.

Un problème non résolu dans les systèmes connus réside dans la difficulté pour lester et maintenir les dépôts lestés (pour les remplir d'eau). L'objet de l'invention résout ce problème.

### Description de l'invention

Le système de génération d'énergie à partir du mouvement des vagues marines, conformément à l'invention, étant de ceux qui comportent une embarcation porteuse d'au moins d'un axe-rotor qui agit sur un générateur d'électricité ; au moins une bouée fixée à l'embarcation au moyen d'un bras ; et des moyens mécaniques de roues libres ou cliquets qui relient chaque bras à un axe-rotor pour transmettre le mouvement de chaque bouée, se caractérise par le fait que l'embarcation comprend, en soi, symétriquement par rapport à son plan de symétrie, au moins, une cavité/dépôt avec une embouchure inférieure pour l'entrée d'eau et une écoutille supérieure refermable pour la sortie d'air ; de manière qu'une fois remplie d'eau, la cavité/le dépôt ferme son écoutille, la surface supérieure de chaque cavité/dépôt restant juste à la hauteur de la ligne de flottaison.

À partir de cette structuration de base, il est indifférent aux effets de l'invention :
- que l'embarcation comporte symétriquement chacune des cavités/dépôts espacées entre elles des deux côtés de leur plan de symétrie, ces cavités/dépôts pouvant être réalisées sur la propre embarcation ou sur des dépôts indépendants fixés solidairement à l'embarcation ;
- que l'embarcation dispose d'une cavité/dépôt unique, centrée par rapport à son plan de symétrie ; ou
- que l'embarcation dispose d'une première cavité/dépôt centrée par rapport au plan de symétrie et chacune des cavités/dépôts additionnelles espacées entre elles des deux côtés du plan de symétrie.

Disposer de plusieurs embarcations est inclus dans l'objet de l'invention, chacune d'entre elles présente n'importe quelle des structurations décrites.

D'autres configurations et avantages de l'invention peuvent être déduits à partir de la description suivante, et des revendications dépendantes.

### Description des dessins

Afin de mieux comprendre l'objet de l'invention, une forme préférentielle de réalisation est représentée sur les figures jointes, pouvant présenter des changements accessoires ne dénaturant pas son fondement. Dans ce cas :
La figure 1 représente un schéma général du système objet de l'invention, pour une configuration dans laquelle l'embarcation (2) dispose d'une cavité/dépôt (5') avec une écoutille (7') centrée par rapport au plan de symétrie (e1).
La figure 2 représente un schéma général du système objet de l'invention, pour une configuration dans laquelle l'embarcation (2) comporte chacune des cavités/dépôt (5) avec chacune ses écoutilles (7) espacées entre elles de chaque côté du plan de symétrie (e1).
La figure 3 représente un schéma général du système objet de l'invention, pour une configuration dans laquelle l'embarcation (2) comprend une cavité/dépôt (5') avec une écoutille (7') centrée par rapport au plan de symétrie (e1); et chacune des cavités/dépôt (5) additionnelles pourvues chacune de ses écoutilles (7) espacées entre elles des deux côtés du plan de symétrie (e1).
La figure 4 représente un schéma général du système objet de l'invention semblable à la figure 1, pour une variante de configuration dans laquelle l'embarcation (2) dispose également symétriquement de flotteurs (8), qui contribuent au maintien de sa surface supérieure (s) juste à la hauteur de la ligne de flottaison (f).

Dans tous ces schémas, le système est représenté sur une mer calme (sans vagues), pour observer son principe de fonctionnement.

### Description d'une réalisation préférentielle

Un exemple de réalisation pratique, non limitative, de la présente invention est décrit ci-après. D'autres modes de réalisation dans lesquels sont introduits des changements accessoires ne dénaturant pas son fondement ne sont exclus en aucune manière.

Le système objet de l'invention comprend principalement :
a) au moins une embarcation (2) porteuse d'au moins, un axe-rotor (3) qui agit sur un générateur d'électricité ;
b) au moins, une bouée (1) fixée à l'embarcation (2) au moyen d'un bras (11) ; et
c) des moyens mécaniques de roues libres ou cliquets qui relient chaque bras (11) à un axe-rotor (3) pour transmettre le mouvement de chaque bouée (1).

Conformément à l'invention, et selon la réalisation représentée, l'embarcation (2) possède un plan de symétrie (e1) et dispose symétriquement d'au moins, une cavité/dépôt (5), (5') avec une embouchure inférieure (6), (6') pour l'entrée d'eau et une écoutille supérieure (7), (7') pour la sortie d'air. L'écoutille supérieure (7), (7') est refermable de manière qu'une fois remplie d'eau la cavité/dépôt (5), (5') ferme son écoutille (7), (7') correspondante, la surface supérieure (s) de chaque cavité/dépôt (5), (5') restant juste à la hauteur de la ligne de flottaison (f).

À partir de cette structuration de base, toutes réalisations qui n'altèrent pas, ne changent pas ou ne modifient pas l'essence de la proposition sont inclues dans l'objet de l'invention.

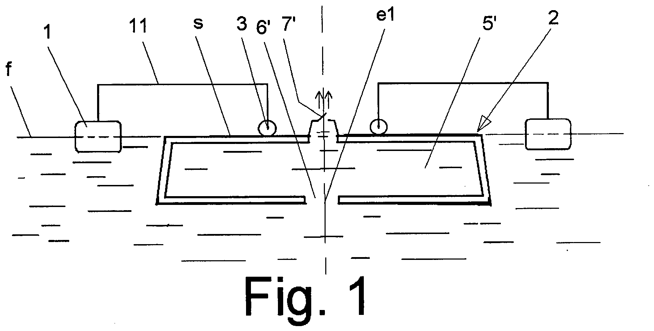

Dans l'exemple de réalisation sur la figure 1, la propre embarcation (2) définit une cavité/dépôt (5') pourvue d'une embouchure inférieure (6') et une écoutille supérieure refermable (7') ; tout cela centré par rapport à leur plan de symétrie. (e1). Sur cette figure, l'embarcation (2) a été représentée avec une structure auto-flottante.

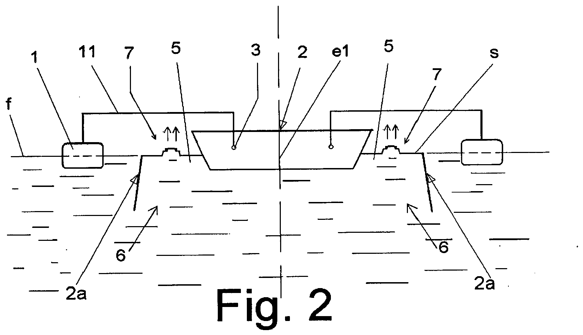

Dans l'exemple de réalisation représenté sur la figure 2, l'embarcation (2) incorpore, symétriquement par rapport à son plan de symétrie (e1), chacun des dépôts indépendants (2a) dans lesquels ont été définies chacune des cavités/dépôt (5) espacées entre elles et pourvue, chacune, d'une embouchure inférieure (6) et d'une écoutille supérieure refermable (7).

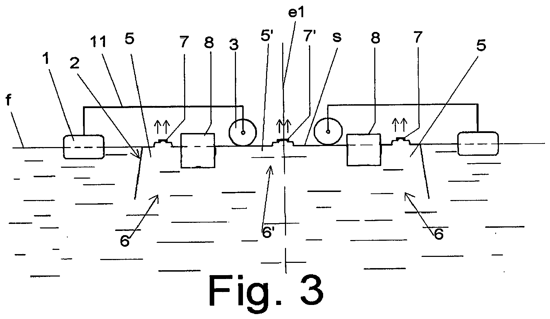

L'exemple de réalisation représenté sur la figure 3 est une combinaison des deux réalisations précédentes :
- la propre embarcation (2) définit une première cavité/dépôt (5') pourvue d'une ouverture inférieure (6') et d'une écoutille supérieure refermable (7') ; tout cela centré par rapport à son plan de symétrie (e1); et
- l'embarcation (2) incorpore, symétriquement par rapport à son plan de symétrie (e1), chacune des deuxièmes cavités/dépôt (5) espacées entre elles et chacune pourvues d'une embouchure inférieure (6) et une écoutille supérieure refermable (7).

Dans cet exemple de réalisation, chacun des flotteurs qui contribuent au maintien de sa surface supérieure (s) juste à la hauteur de la ligne de flottaison (f) sont disposés symétriquement (8).

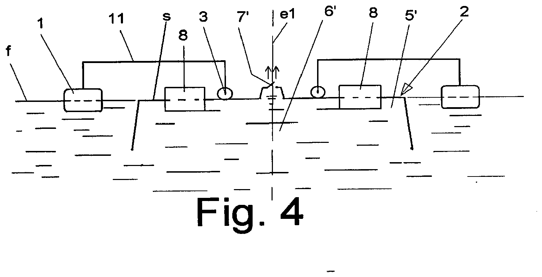

L'exemple de réalisation représenté sur la figure 4 est semblable à celui représenté sur la figure 1, pour une variante de configuration dans laquelle l'embarcation (2) dispose également symétriquement de flotteurs (8), qui contribuent au maintien de leur surface supérieure (s) juste à la hauteur de la ligne de flottaison (f).

Avec n'importe quelle de ces structures et disposition d'éléments, le lestage des cavités/dépôt (5), (5') est réalisé avec de l'eau de mer, qui entre librement par les embouchures inférieures (6), (6') simultanément à l'expulsion de l'air par les écoutilles supérieures (7), (7') alors que ces dernières restent ouvertes.

Lorsque les cavités/dépôts (5), (5') se remplissent d'eau de mer (et qu'il n'y a déjà plus d'air à l'intérieur), les écoutilles supérieures (7), (7') se ferment avec ce que le système a lesté laissant la surface supérieure (s) de chaque cavité/dépôt (5), (5') juste à la hauteur de la ligne de flottaison (f).

Aussi bien la façon de fermer les écoutilles supérieures (7), (7') que les moyens employés pour le faire sont indifférents aux effets de l'invention.

Une fois que la centrale est lestée et dans la mer, du moment qu'il y a des vagues, l'embarcation (2) aura tendance à monter par l'action des bouées (1). Simultanément, les cavités/dépôt (5), (5') monteront également, ces dernières, chargées d'eau mer, agissent déjà comme des dépôts lestés qui se trouvaient juste en-dessous de la ligne de flottaison (f). Ces cavités/dépôts lestés (5), (5') en sortant hors de l'eau ajoutent leur poids à celui de l'embarcation (2), augmentant la résistance aux bras (11) des bouées (1), dont l'effort est transmis aux axes qui agissent sur les générateurs (3).

Bien qu'elle n'apparaisse seulement que sur la figure 1, la structure de l'embarcation (2) peut être auto-flottante dans n'importe quelles réalisations, auquel cas, les flotteurs (8) seraient facultatifs.

Si les cavités/dépôts (5), (5') ne se remplissent pas d'eau (par exemple, si elles ne se remplissaient que partiellement), le système fonctionne (de manière imparfaite, mais il fonctionne) ce qui explique que cette possibilité soit également incluse dans l'objet de l'invention.

Disposer de plusieurs embarcations (2) adossées ou alignées, et fixées entre elles formant une plateforme unique ; où chacune de ces embarcations (2) présente n'importe quelle des structurations décrites est également inclus dans l'objet de l'invention.

Les matériaux, les dimensions, les tailles et, de manière générale, ces autres détails accessoires ou secondaires qui n'altèrent pas, ne changent pas ou ne modifient pas l'essence de la proposition pourront être variables.

Les termes dans lesquels ce mémoire est rédigé sont certains et reflètent fidèlement l'objet décrit, qui doit être considéré dans son sens le plus élargi et jamais de façon limitative.

## Revendications

1. Un système de génération d'énergie à partir du mouvement des vagues marines, qui comprend
a) au moins une embarcation (2) porteuse d'au moins, un axe-rotor (3) qui agit sur un générateur d'électricité ;
b) au moins, une bouée (1) fixée à l'embarcation (2) au moyen d'un bras (11) ; et
c) des moyens mécaniques de roues libres ou cliquets qui relient chaque bras (11) à un axe-rotor (3) pour transmettre le mouvement de chaque bouée (1);
**caractérisé par le fait que** l'embarcation (2) dispose, en soi, symétriquement par rapport à un plan de symétrie (e1), au moins, une cavité/dépôt (5), (5') avec une embouchure inférieure (6), (6') pour l'entrée d'eau et une écoutille supérieure refermable (7), (7') pour la sortie d'air; de manière qu'une fois remplie d'eau, la cavité/dépôt (5), (5') ferme son écoutille supérieure (7), (7') la surface supérieure (s) de chaque cavité/dépôt (5), (5') restant juste à la hauteur de la ligne de flottaison (f).

2. Un système de génération d'énergie à partir du mouvement des vagues marines, selon la revendication 1, **caractérisé par le fait que** l'embarcation (2) dispose symétriquement de chacune des cavités/dépôts (5) espacées entre elles des deux côtés de leur plan de symétrie (e1).

3. Un système de génération d'énergie à partir du mouvement des vagues marines, selon la revendication 1 ; **caractérisé par le fait que** l'embarcation (2) dispose d'une cavité/dépôt (5') unique, centrée par rapport à son plan de symétrie (e1).

4. Un système de génération d'énergie à partir du mouvement des vagues marines, selon la revendication 1 ; **caractérisé par le fait que** l'embarcation (2) dispose d'une première cavité/dépôt (5') centrée par rapport à son plan de symétrie (e1) ; et chacune des deuxièmes cavités/dépôt (5) espacées entre elles des deux côtés de leur plan de symétrie (e1).

5. Un système de génération d'énergie à partir du mouvement des vagues marines, selon la revendication 2 ; **caractérisé par le fait que** les cavités/dépôts citées (5), (5') sont utilisées dans la propre embarcation (2).

6. Un système de génération d'énergie à partir du mouvement des vagues marines, selon la revendication 2 ; **caractérisé par le fait que** les cavités/dépôt citées (5) sont utilisées dans des dépôts indépendants (2a) fixés solidairement à l'embarcation (2).

7. Un système de génération d'énergie à partir du mouvement des vagues marines, selon l'une des revendications précédentes ; **caractérisé par le fait que**, de plus, l'embarcation (2) dispose symétriquement d'un ou plusieurs flotteurs (8), qui contribuent au maintien de leur surface supérieure (s) juste à la hauteur de la ligne de flottaison (f).

## Patentansprüche

1. System zur Erzeugung von Energie aus der Bewegung der Meereswellen, umfassend
a) mindestens ein Wasserfahrzeug (2), das mindestens einen Achsen-Rotor (3) trägt, der einen Stromgenerator antreibt;
b) mindestens eine Boje (1), die an dem Wasserfahrzeug (2) über einen Arm (11) befestigt ist; und
c) mechanische Vorrichtungen mit freien Rädern oder Klinken, die jeden Arm (11) mit einem Achsen-Rotor (3) verbinden, um die Bewegung jeder Boje (1) zu übertragen;
**gekennzeichnet dadurch, dass** das Wasserfahrzeug (2) in sich selbst symmetrisch im Verhältnis zu einer Symmetriefläche (e1) über mindestens einen Hohlraum/Behälter (5), (5') verfügt, mit einer unteren Öffnung (6), (6') für den Einlass von Wasser und eine obere verschließbare Klappe (7), (7') für den Auslass des Wassers; so dass, wenn der Hohlraum/Behälter (5), (5') mit Wasser gefüllt ist, die obere Klappe (7), (7') geschlossen wird und die obere Fläche (s) jedes Hohlraums/Behälters (5),(5') genau auf der Höhe der Wasserlinie (f) bleibt.

2. System zur Erzeugung von Energie aus der Bewegung der Meereswellen nach Anspruch 1, **gekennzeichnet dadurch, dass** das Wasserfahrzeug (2) symmetrisch über jeweilige Hohlräume/Behälter (5) verfügt, die zwischen sich auf beiden Seiten der Symmetriefläche (e1) mit einem Zwischenraum versehen sind.

3. System zur Erzeugung von Energie aus der Bewegung der Meereswellen nach Anspruch 1, **gekennzeichnet dadurch, dass** das Wasserfahrzeug (2) über einen einzelnen Hohlraum/Behälter (5') verfügt, der im Verhältnis zur Symmetriefläche (e1) zentriert ist.

4. System zur Erzeugung von Energie aus der Bewegung der Meereswellen nach Anspruch 1, **gekennzeichnet dadurch, dass** das Wasserfahrzeug (2) über einen ersten Hohlraum/Behälter (5') verfügt, der im Verhältnis zur Symmetriefläche (e1) zentriert ist; und die jeweiligen zweiten Hohlräume/Behälter zwischen sich auf beiden Seiten mit einer Symmetriefläche (e1) versehen sind.

5. System zur Erzeugung von Energie aus der Bewegung der Meereswellen nach Anspruch 2, **gekennzeichnet dadurch, dass** die genannten Hohlräume/Behälter (5), (5') am Wasserfahrzeug (2) selbst ausgeführt sind.

6. System zur Erzeugung von Energie aus der Bewegung der Meereswellen nach Anspruch 2, **gekennzeichnet dadurch, dass** die genannten Hohlräume/Behälter (5) an unabhängigen Behältern (2a) ausgeführt sind, die gemeinsam am Wasserfahrzeug (2) angebracht sind.

7. System zur Erzeugung von Energie aus der Bewegung der Meereswellen nach einem der vorhergehenden Ansprüche; **gekennzeichnet dadurch, dass** das Wasserfahrzeug (2) zusätzlich symmetrisch über einen oder mehrere Schwimmer (8) verfügt, die dazu beitragen, die obere Fläche (s) direkt in der Höhe der Wasserlinie (f) zu halten.

## Claims

1. A system for generating energy from ocean wave motion, which consists of
a) at least one vessel (2) supporting at least one shaft-rotor (3) that engages with an electricity generator;
b) at least one buoy (1) connected to the vessel (2) by means of an arm (11); and
c) mechanical means of freewheels or pawls that connect each arm (11) to a shaft-rotor (3) to transmit the motion of each buoy (1);
**characterised in that** the vessel (2) has, in itself, symmetrically relative to a plan of symmetry thereof (e1), at least one recess/tank (5), (5') with a lower opening (6), (6') for water to enter and a closable upper hatch (7), (7') for the release of air; so that, once the recess/tank (5), (5') is filled with water, its upper hatch is closed (7), (7') the upper surface (s) of each recess/tank (5),(5') being left precisely at the level of the water line (f).

2. A system for generating energy from ocean wave motion, according to claim 1, **characterised in that** the vessel (2) symmetrically arranges two recesses/tank (5) spaced from each other on both sides of the plane of symmetry thereof (e1).

3. A system for generating energy from ocean wave motion, according to claim 1; **characterised in that** the vessel (2) has a single recess/tank (5'), centered relative to the plane of symmetry thereof (e1).

4. A system for generating energy from ocean wave motion, according to claim 1; **characterised in that** the vessel (2) has a first recess/tank (5') centered relative to the plane of symmetry thereof (e1); and two additional recesses/tank (5) spaced from each other on both sides of the plane of symmetry thereof (e1).

5. A system for generating energy from ocean wave motion, according to claim 2; **characterised in that** the stated recesses/tank (5), (5') are made in the vessel (2) itself.

6. A system for generating energy from ocean wave motion, according to claim 2; **characterised in that** the stated recesses/tank (5) are made in separate tanks (2a) connected to the vessel (2).

7. A system for generating energy from ocean wave motion, according to one of the foregoing claims; **characterised in that**, in addition, the vessel (2) has one or several symmetrically arranged buoys (8), which contribute to maintaining its upper surface (s) precisely at the level of the water line (f).
